# EUROPEAN PATENT APPLICATION

(11) **EP 3 865 324 A1**
(43) Date of publication of application: **18.08.2021**
(21) Application number: 21156754.0
(22) Date of filing: 12.02.2021
(51) Int. Cl.: B60G 17/0185, B60D 1/24, B60D 1/06, G01G 19/08

(54) **TRAILER TONGUE LOAD DETECTION AND RELATED METHODS**

(30) Priority: 12.02.2020 US 202016788740
(71) Applicant: Continental Automotive Systems, Inc., Auburn Hills MI 48326 (US)
(72) Inventor: Coullard, Bryan, 60488 Frankfurt am Main (DE); Letizio, Matthew, 60488 Frankfurt am Main (DE); Luomaranta, Vesa Vilhelm, 60488 Frankfurt am Main (DE)
(74) Representative: Continental Corporation

(57) **Abstract**

A method includes detecting whether a negative load has been placed on a hitch with a load detection assembly, determining if a rear axle height has changed from a predetermined value, determining if rear axle has been raised if the rear axle height increased from the predetermined value and whether a negative tongue load is present, and informing driver of the increase in rear axle height due to the negative load on the hitch.

## Description

The disclosure herein relates to trailer tongue load detection according to the method of claim 1.

Vehicles are commonly used to pull trailers of various kinds. Examples of trailers includes trailers for hauling heavy cargo or trailers for hauling animals. Sometimes trailers are loaded with items that are placed on the trailer causing an overload on the hitch or a negative load on the hitch. An improperly loaded trailer can cause a vehicle to become unstable while driving at higher speeds and lead to catastrophic sway during use of the vehicle. What is needed is a better way to detect when inappropriate loading of a trailer has occurred.

An objective of the invention is to provide a method which can detect an improperly loaded trailer.

This objective is achieved by the features of the independent claim. Advantageous embodiments of the invention are given in the sub-claims.

In accordance with an aspect of the invention, this objective is achieved by a method comprising:
detecting whether a negative load has been placed on a hitch with a load detection assembly;
determining if a rear axle height has changed from a predetermined value; determining if rear axle has been raised if the rear axle height increased from the predetermined value;
calculating a tongue load with a device;
determining whether a negative tongue load is present; and
informing driver of the increase in rear axle height due to the negative load on the hitch.

The method includes detecting whether a negative load has been placed on a hitch with a load detection assembly, determining if a rear axle height has changed from a predetermined value, determining if rear axle has been raised if the rear axle height increased from the predetermined value and whether a negative tongue load is present, and informing driver of the increase in rear axle height due to the negative load on the hitch.

In one or more embodiments, the hitch is connected to a trailer.

In one or more embodiments, the method further includes measuring the load with a load sensing trailer ball hitch.

In one or more embodiments, the method further includes measuring the load with electronic suspension sensors.

In one or more embodiments, informing the driver the increase in rear axle height due to the load on the hitch includes providing an audio notification to the driver.

In one or more embodiments, informing the driver the increase in rear axle height due to the load on the hitch includes providing a visual notification to the driver.

In one or more embodiments, informing the driver the increase in rear axle height due to the load on the hitch includes providing an audio and visual notification to the driver.

The invention will be better understood from the following detailed description of the preferred embodiments thereof, taken in conjunction with the accompanying drawings, wherein like reference numerals refer to like parts, in which:
FIG. 1 illustrates a side perspective view of a system, as constructed in accordance with one or more embodiments.
FIG. 2 illustrates a side perspective view of a system, as constructed in accordance with one or more embodiments.
FIG. 3 illustrates a flow chart for a method, as constructed in accordance with one or more embodiments.

These and other embodiments, aspects, advantages, and features of the present invention will be set forth in part in the description which follows and will become apparent to those skilled in the art by reference to the following description of the invention and referenced drawings or by practice of the invention. The aspects, advantages, and features of the invention are realized and attained by means of the instrumentalities, procedures, and combinations particularly pointed out in the appended claims and their equivalents.

The following detailed description includes references to the accompanying drawings, which form a part of the detailed description. The drawings show, by way of illustration, specific embodiments in which the apparatus may be practiced. These embodiments, which are also referred to herein as "examples" or "options," are described in enough detail to enable those skilled in the art to practice the present embodiments. The embodiments may be combined, other embodiments may be utilized, or structural or logical changes may be made without departing from the scope of the invention. The following detailed description is, therefore, not to be taken in a limiting sense and the scope of the invention is defined by the appended claims and their legal equivalents.

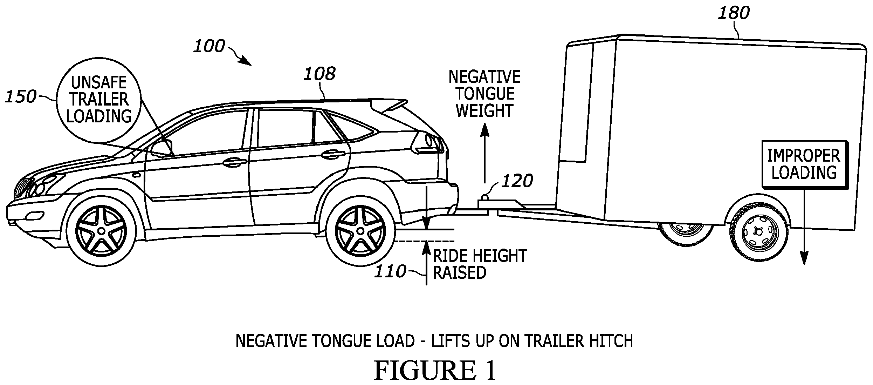

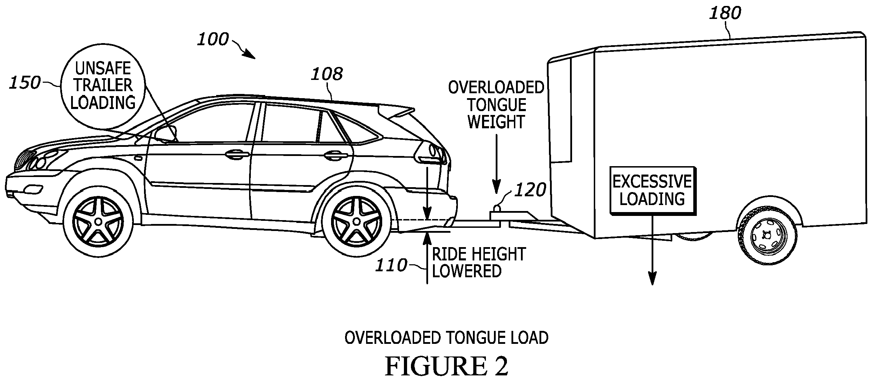

A system 100, as shown in FIGs. 1 and 2, includes a vehicle 108 with a hitch 120 and a trailer 180. The load from the trailer 180 can affect the ride height, for instance causing a change in ride height 110. In one or more embodiments, the system 100 determines if there is an overloaded tongue weight from the trailer 180 (FIG. 2) or if there is a negative tongue load, which lifts up on the trailer hitch 120 (FIG. 1). The ride height is raised with a negative tongue weight, as shown in FIG. 1. For an overloaded trailer at the front of the trailer, the ride height can be lowered, as shown in FIG. 2.

In one or more embodiments the system 100 includes a device to detect whether a trailer is present and when a trailer that is connected to the vehicle has an improper tongue load on the hitch 120. In one or more embodiments, the device includes using the electronic suspension sensorics and logic in comparison with other vehicle signals to detect when a trailer 180 is present. In one or more embodiments, the device used to detect tongue load is a load sensing trailer ball-hitch drawbar, for example as shown in US 6,035,521. In one or more embodiments, the device includes a hitch ball with a built-in scale. In one or more embodiments, a processor is used to determine the calculations of height change and tongue load, for example.

A method includes detecting whether a negative load has been placed on a hitch with a load detection assembly, determining if a rear axle height has changed from a predetermined value, determining if rear axle has been raised if the rear axle height increased from the predetermined value and whether a negative tongue load is present, and informing driver of the increase in rear axle height due to the negative load on the hitch.

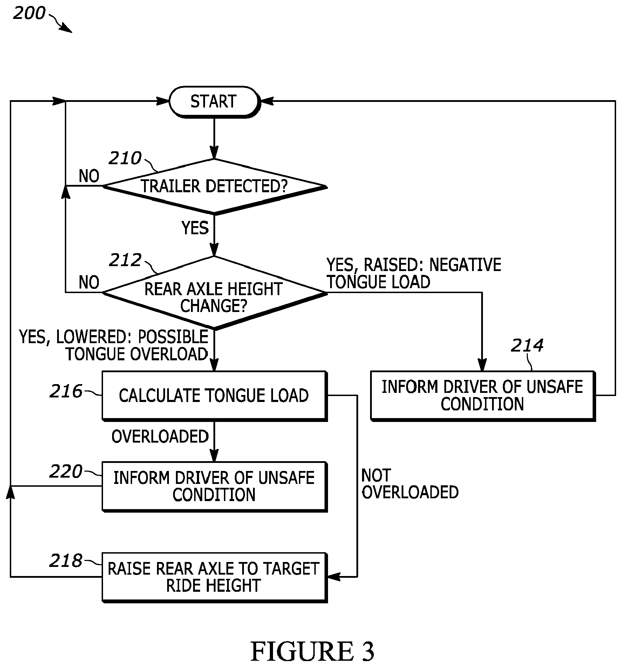

Figure 3 illustrates a flow chart for the method. At 210, the presence of a trailer is detected, and if a trailer is detected as being present, the method checks at 212 whether there is a change in rear axle height from a predetermined value. If it is determined that there is a change in rear axle height, the system evaluates if is lowered or raised from the predetermined value. If lowered, there is a possible tongue overload and at 216. Using a processor, a tongue load is calculated and at 218 the tongue is raised to the target ride height if there is no tongue overload. If the tongue load calculation at 216 determines there is a tongue overload a signal is sent to inform the driver at 220, for example visually and/or audially.

If at 212 it is determined there is a raise in axle height, it determines a negative tongue load is present, and at 214 the driver is informed for example visually and/or audially.

The above description is intended to be illustrative, and not restrictive. Many other embodiments will be apparent to those of skill in the art upon reading and understanding the above description. Embodiments discussed in different portions of the description or referred to in different drawings can be combined to form additional embodiments of the present application. The scope should, therefore, be determined with reference to the appended claims, along with the full scope of equivalents to which such claims are entitled.

## Claims

1. A method comprising:
detecting whether a negative load has been placed on a hitch (120) with a load detection assembly;
determining if a rear axle height (110) has changed from a predetermined value;
determining if rear axle has been raised if the rear axle height (110) increased from the predetermined value;
calculating a tongue load with a device;
determining whether a negative tongue load is present; and
informing driver of the increase in rear axle height (110) due to the negative load on the hitch (120).

2. The method according to claim 1, wherein the hitch (120) is connected to a trailer (180).

3. The method according to claim 1 or 2, further comprising measuring the load with a load sensing trailer ball hitch.

4. The method according to one of the claims 1 to 3, further comprising measuring the load with electronic suspension sensors.

5. The method according to one of the claims 1 to 4, wherein informing the driver the increase in rear axle height (110) due to the load on the hitch (120) includes providing an audio and/or visual notification to the driver.

6. The method according to one of the claims 1 to 4, wherein informing the driver the increase in rear axle height (110) due to the load on the hitch (120) includes providing a visual notification to the driver.

7. The method according to one of the claims 1 to 4, wherein informing the driver the increase in rear axle height (110) due to the load on the hitch (120) includes providing an audio and visual notification to the driver.

8. The method according to one of the claims 1 to 7, wherein the device is a hitch ball with a built-in scale.

9. The method according to one of the claims 1 to 8, further comprising determining if there is an overload at the hitch (120).

10. The method as recited in claim 9, further comprising informing the driver of the overload.
